# EUROPEAN PATENT APPLICATION

(11) **EP 4 838 919 A1**
(43) Date of publication of application: **11.11.2026**
(21) Application number: 25174154.2
(22) Date of filing: 05.05.2025
(51) Int. Cl.: H04W 12/02, G01S 13/00, H04W 12/06, H04W 12/63, H04W 12/12

(54) **SENSING SECURITY IN WIRELESS SENSING APPLICATIONS**

(71) Applicant: Vestel Elektronik Sanayi ve Ticaret A.S., 45030 Manisa (TR)
(72) Inventor: AYGÜL, Mehmet Ali, 45030 Manisa (TR); ARSLAN, Hüseyin, 45030 Manisa (TR)
(74) Representative: Grünecker Patent- und Rechtsanwälte PartG mbB

(57) **Abstract**

Some embodiments in the present disclosure relate to improving security in sensing applications. In particular, a wireless sensing method for wireless sensing of a target is provided. The method comprises determining whether a wireless sensing operation is subject to a spatial constraint and/or an authorization condition; obtaining area information indicating a spatial area, if the wireless sensing operation is subject to the spatial constraint; obtaining authorization information indicating whether or not wireless sensing of the target is permitted, if the wireless sensing operation is subject to the authorization condition; performing the wireless sensing operation, if the wireless sensing operation is not subject to the authorization condition or the authorization information indicates that the wireless sensing of the target is permitted, wherein the wireless sensing operation is performed only within the area indicated by the area information, if the wireless sensing operation is subject to the spatial constraint.

## Description

The present disclosure relates to wireless sensing applications. In particular, the present disclosure provides methods and apparatuses for such wireless sensing applications.

### BACKGROUND

Wireless communication has been advancing over several decades now. Exemplary notable standards organizations include the 3rd Generation Partnership Project (3GPP) and IEEE 802.11, commonly referred to as Wi-Fi.

Flexibility and adaptivity have been desired since the beginning of wireless communication systems. For example, flexible signaling with link adaptation techniques (adaptive modulation and coding, and power control) has been aims in the second generation (2G) standardization of wireless cellular systems. Besides that, in Long Term Evolution (LTE)-Advanced (LTE-A) depending on the cell size, orthogonal frequency division multiplexing (OFDM) symbols are designed with either normal cyclic prefix (CP) or extended CP. Also, to support a wide variety of communication applications waveform flexibility is extended to additional parameters' flexibility such as subcarrier spacing in fifth generation (5G) standardization of New Radio (NR), where depending on the channel conditions and the communication service (enhanced mobile broadband (eMBB), massive machine type communications (mMTC), ultra-reliable low latency communications (URLLC)) required, the most suitable numerology is selected. Similarly, wireless local area network (WLAN) standards have incorporated radio environment maps to provide awareness of the radio environment network and have developed standards such as the 802.22 for cognitive radios (CR)s and European Telecommunications Standards Institute's (ETSI)'s reconfigurable radio systems (RRS). Both of these standards bring flexibility and adaptivity to WLAN systems to improve communication performance in dynamic conditions.

Future wireless devices are expected to be sensing capable, or at times, solely wireless sensors, to support communication applications and/or provide a wide range of other applications, such as fully immersive extended reality, improving quality of life by enabling smart environments, improving health-related applications through non-invasive tests and vital signs monitoring, and much more (e.g. V. Ziegler and S. Yrjola, "6G Indicators of Value and Performance," 2020 2nd 6G Wireless Summit (6G SUMMIT), Levi, Finland, 2020, pp. 1-5, doi: 10.1109/6GSUMMIT49458.2020.9083885). Therefore, these properties and applications should be defined in the standards. Currently, IEEE 802.11TGbD is working on wireless sensing and a set of protocols are to be defined to efficiently integrate wireless sensing into WLAN networks.

Security/privacy is one of the concerns in these systems. Techniques like end-to-end encryption, public-key cryptography, and secure protocols contribute to a robust defense against eavesdropping by ensuring that only intended recipients can decrypt and understand transmitted data.

End-to-End Encryption (E2EE) ensures that the content of a message is encrypted on the sender's device and only decrypted on the recipient's device. This means that even a service provider facilitating the communication cannot access the content of the message. E2EE commonly employs symmetric-key cryptography, where both the sender and the recipient share a secret key.

Public-Key Cryptography uses a pair of keys, namely a public key, which is shared openly, and a private key, which is kept secret. Messages encrypted with the public key can only be decrypted with the corresponding private key, and vice versa. This approach enables secure communication without the need for both parties to share a secret key beforehand.

Secure Communication Protocols, such as TLS (Transport Layer Security) or its predecessor SSL (Secure Sockets Layer), establish encrypted connections between two parties. These protocols use a combination of symmetric and asymmetric cryptography to secure the data transmission. For instance, during a TLS handshake, a client and a server negotiate a shared secret (symmetric key) for the session, ensuring that even if intercepted, the data remains secure.

For wireless sensing applications, for instance, Weiyan Shi et al. proposes WiCross (Weiyan Shi et al.: WiCross: Indoor Human Zone-Crossing Detection Using Commodity Wi-Fi Devices", DOI: 10.48550/arXiv.2503.20331), a system that uses commercial Wi-Fi devices to detect if a person crosses a designated indoor zone (like a doorway) by analyzing phase patterns in Wi-Fi Channel State Information (CSI). It differentiates true crossings from false positives (e.g., turning back) by identifying specific cumulative phase change patterns.

Zhanjun Hao et al.: "Wi-CHAR: A Wi-Fi Sensing Approach with Focus on Both Scenes and Restricted Data", Sensors 2024, 24, 2364, DOI: 10.3390/s24072364 describes Wi-CHAR, a Wi-Fi-based human activity recognition system that addresses data scarcity and environmental variability using few-shot learning. It dynamically selects optimal receivers to improve data quality and uses MF-DBSCAN clustering to refine noisy signals. Wi-CHAR is designed to tackle both the intricacies of specific sensing environments and pertinent data-related issues.

Techniques like above-described end-to-end encryption, public-key cryptography, and secure protocols protect the transmitted data, but do not address security threats in sensing. In other words, in communication, data security may be ensured with cryptography-based methods. However, sensing data may be considered to be of low importance and is thus not addressed by above-mentioned methods, which protect the content carried by the signal rather than the signal itself. Active sensing attacks, i.e. when a sensing signal is generated and transmitted by an attacker, exploit the intentional emission of wireless signals by sensing devices to extract sensitive information or infer private user activities. In such attacks, an illegitimate user transmits probing signals and analyzes the responses, such as reflections or delays, to gather data about the physical environment or targets. The illegitimate user/the attacker may uses existing sensing signals and, in other words, performs passive sensing using sensing signals transmitted by a legitimate user. In other words, such passive sensing attacks involve eavesdropping on ambient wireless signals to infer sensitive information without transmitting any signals. Therefore, it might not be easy for the legitimate user to detect the illegitimate passive sensing. For example, an illegitimate user may try to sense what is behind a wall by evesdropping and analyzing the sensing signals utilized.

Therefore, advanced sensing security techniques are required.

### SUMMARY

Methods and techniques, as well as the corresponding devices are provided, facilitating sensing security in wireless sensing applications.

The invention is defined by the independent claims. Some exemplary implementations are provided by the dependent claims.

In some exemplary implementations, a wireless sensing method for wireless sensing of a target is provided. The method comprises the steps of determining whether a wireless sensing operation is subject to a spatial constraint and/or an authorization condition; obtaining area information indicating a spatial area, if the wireless sensing operation is subject to the spatial constraint; obtaining authorization information indicating whether or not wireless sensing of the target is permitted, if the wireless sensing operation is subject to the authorization condition; and performing the wireless sensing operation, if the wireless sensing operation is not subject to the authorization condition or the authorization information indicates that the wireless sensing of the target is permitted. The wireless sensing operation is performed only within the area indicated by the area information, if the wireless sensing operation is subject to the spatial constraint.

In some exemplary implementations, a wireless sensing apparatus for wireless sensing of a target is provided. The wireless sensing apparatus comprises a transceiver and circuitry. The circuitry is configured to determine whether a wireless sensing operation is subject to a spatial constraint and/or an authorization condition; obtain area information indicating a spatial area, if the wireless sensing operation is subject to the spatial constraint; obtain authorization information indicating whether or not wireless sensing of the target is permitted, if the wireless sensing operation is subject to the authorization condition; and perform the wireless sensing operation by controlling the transceiver, if the wireless sensing operation is not subject to the authorization condition or the authorization information indicates that the wireless sensing of the target is permitted. The wireless sensing operation is performed only within the area indicated by the area information, if the wireless sensing operation is subject to the spatial constraint

These and other features and characteristics of the presently disclosed subject matter, as well as the methods of operation and functions of the related elements of structures and the combination of parts and economies of manufacture, will become more apparent upon consideration of the following description and the appended claims with reference to the accompanying drawings, all of which form a part of this specification. It is to be expressly understood, however, that the drawings are for the purpose of illustration and description only and are not intended as a definition of the limits of the disclosed subject matter. As used in the specification and the claims, the singular form of "a," "an," and "the" include plural referents unless the context clearly dictates otherwise.

### BRIEF DESCRIPTION OF DRAWINGS

An understanding of the nature and advantages of various embodiments may be realized by reference to the following figures.
- Fig. 1: is a block diagram illustrating a basic communication system;
- Fig. 2a to 2f: illustrate examples of different sensing configurations;
- Fig. 3: is a schematic drawing summarizing the approach of the present disclosure;
- FIG. 4: is a schematic drawing illustrating an environment in which a sensing apparatus may operate;
- Fig. 5: is a flow diagram illustrating a wireless sensing method according to the present disclosure;
- Fig. 6: is block diagram illustrating the structure of a wireless sensing system according to the present disclosure; and
- Fig. 7: is a block diagram illustrating the structure of a wireless communication apparatus.

### DETAILED DESCRIPTION

For purposes of the description hereinafter, the terms "end," "upper," "lower," "right," "left," "vertical," "horizontal," "top," "bottom," "lateral," "longitudinal," and derivatives thereof shall relate to the disclosed subject matter as it is oriented in the drawing figures. However, it is to be understood that the disclosed subject matter may assume various alternative variations and step sequences, except where expressly specified to the contrary. It is also to be understood that the specific devices and processes illustrated in the attached drawings, and described in the following specification, are simply exemplary embodiments or aspects of the disclosed subject matter. Hence, specific dimensions and other physical characteristics related to the embodiments or aspects disclosed herein are not to be considered as limiting unless otherwise indicated.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, and/or the like) and may be used interchangeably with "one or more" or "at least one." Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise.

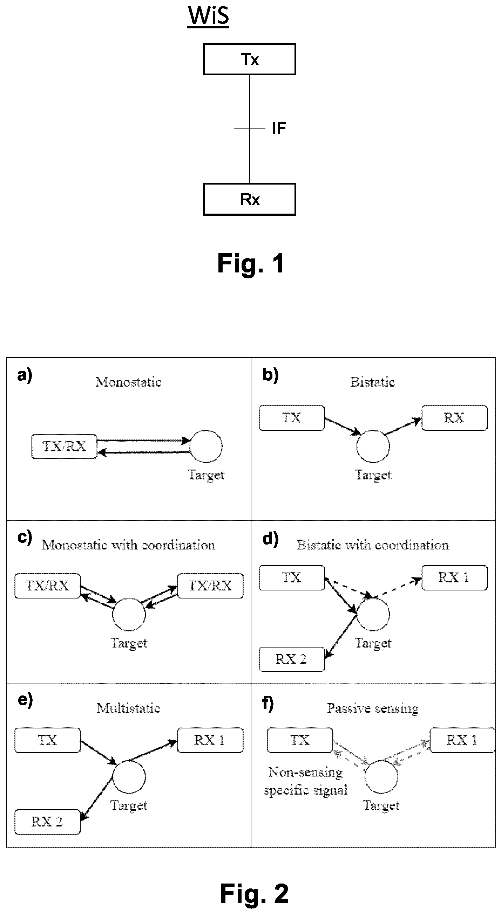

Fig. 1 illustrates an exemplary wireless system WiS in which Tx represents a transmitter and Rx represents a receiver of a wireless signal. The transmitter Tx is capable of transmitting a signal to the receiver Rx or to a group of receivers or to broadcast a signal over an interface If. The interface IF may be any wireless interface. The interface IF may be specified by means of resources, which can be used for the transmission and reception by the transmitter Tx and the receiver Rx. Such resources may be defined in one or more (or all) of the time domain, frequency domain, code domain, and space domain. It is noted that in general, the "transmitter" and "receiver" may be also both integrated in the same device. In other words, the devices Tx and Rx in Fig. 1 may respectively also include the functionality of the Rx and Tx.

The present disclosure is not limited to any particular transmitter Tx, receiver Rx and/or interface IF implementation. However, it may be applied readily to some existing communication systems as well as to the extensions of such systems, or to new communication systems. Exemplary existing communication systems may be, for instance the 5G New Radio (NR) in its current or future releases, and/or the IEEE 802.11 based systems such as the recently studied IEEE 802.11bf or the like. The wireless signal is not necessarily a communication signal in the sense that it does not necessarily carry out human or machine communication. It may be a sensing signal such as radar signal or sounding signal or any other kind of wireless signal.

The IEEE 802.11, commonly referred to as Wi-Fi, has been around for three decades and has become arguably one of the most popular wireless communication standards with billions of devices supporting more than half of the worldwide wireless traffic. The increasing user demands in terms of throughput, capacity, latency, spectrum, and power efficiency calls for updates or amendments to the standard to keep up with them.

In the future, there will likely be a wide variety of sensing applications and each application will have an optimum frame design and transmission mechanism. Additionally, these sensing applications will be integrated into communication frameworks, such as Wireless Fidelity (Wi-Fi) or NR or the like.

In the future, the importance of Wi-Fi sensing will increase and Wi-Fi sensing might be used in many hotels, schools, hospitals and even homes. In this way, motion detection, person detection and many similar sensing applications may be performed without the need for extra hardware such as cameras or sensors. However, there might be disadvantages in that new security problems arise. For example, movements behind walls may be examined with Wi-Fi sensing. Even if this might good and intended in some cases, for example, to monitor the health of the elderly, their survival, etc., the ability to measure people without harming their personal rights (for example, taking images from the camera) comes with certain disadvantages.

In the Wi-Fi domain, the IEEE 802.11 Task Group bf (TGbf) is formalizing WLAN sensing capabilities under the emerging 802.11bf amendment. This standard aims to enable stations to extract features of a surrounding environment or a target by analyzing variations in received Wi-Fi signals. It encompasses modifications to both MAC and PHY layers to support sensing in unlicensed frequency bands, while also highlighting the need for robust privacy and security mechanisms in Wi-Fi-based sensing applications.

In parallel, cellular standardization bodies such as 3GPP and ETSI are exploring Integrated Sensing and Communication (ISAC) as a core component of 6G networks. The ETSI ISG ISAC group is working toward defining use cases, performance metrics, advanced channel models, and architectural requirements to enable joint communication and sensing across diverse radio access technologies. These efforts address not only sensing performance and coverage, but also critical aspects such as data integrity, user privacy, and security in pervasive sensing scenarios.

The present disclosure is directed toward improving the security and robustness of wireless sensing systems, thereby supporting and extending the goals of current and emerging standardization efforts, for example in both IEEE 802.11bf and 3GPP/6G ISAC frameworks.

Sensing devices have wireless sensing functionality. They are configured to run a sensing application. These devices may be also configurable or configured to perform wireless communication to transmit their sensed measurements, which is typically a small amount of data compared to amounts of data transmitted by usual communication applications or devices. In the sensing, measurements are taken as the parameters (features) which can be extracted from the wireless signal received, whether directly or after some processing. Some non-limiting examples of measured parameters include received signal strength indicator (RSSI), channel state information (CSI), range, velocity, or the like.

JSC (joint sensing and communication) devices are configured to run both the communication application(s) or the sensing application(s). For example, the main function of JSC devices may be communication, meaning they may have a large amount of data to transmit, but they can perform wireless sensing as well, to improve communication performance or for a user application, such as navigation, or the like.

Some non-limiting examples of sensing devices include smart bands, non-invasive medical sensors, such as heart rate monitors, body mass monitors, or the like. Non-limiting examples of applications supported (implemented) by JSC devices include object tracking and/or user tracking for beam management, physical layer security through physical user (human) identification, or the like. Non-limiting exemplary devices include cellphones, laptops, tablets, access points (APs), or the like.

In general, when referring herein to a sensing signal, what is meant is a signal generated by a sensing application. This may be the sensing signal itself (such as radar impulse or continuing signal) or signal of the sensing application reporting the sensing results (such as environment condition, medical parameter status, or the like) or a communication signal (also) used for sensing. Similarly, the communication signal refers to a signal which may include communication payload and/or control data.

Figs. 2a to 2f illustrate examples of different sensing configurations. Techniques such as channel state information (CSI) based sensing, which leverages the phase and magnitude information of Wi-Fi signals across subcarriers, are commonly used for Wi-Fi sensing applications. Machine learning algorithms are often employed to interpret these changes and make inferences about the environment.

Fig. 2a illustrates a general setup of a system performing monostatic sensing. In a monostatic sensing setup, the same device (such as an access point or a Wi-Fi-enabled device like a smartphone) both transmits the sensing signals and receives the reflections of those signals for sensing purposes. In the context of Wi-Fi sensing, monostatic sensing relies on analyzing changes in the Wi-Fi signals caused by reflections of objects in the environment. These changes can include alterations in signal strength, phase, and timing. By analyzing these changes, it may be possible to infer properties of the environment or detect the presence of objects or people.

Fig. 2b illustrates a general setup of a system performing bistatic sensing. Bistatic sensing refers to a sensing configuration where the transmitting and receiving devices are separate entities. Unlike monostatic sensing, where a single device serves both purposes, bistatic sensing involves distinct devices or antennas for transmitting and receiving the sensing signals. The transmitter emits a sensing, which then interacts with objects and surfaces in the vicinity. These interactions cause changes in signal characteristics such as amplitude, phase, and frequency. The receiver detects these modified signals, which may be analyzed to extract relevant information about the environment or objects within it.

Fig. 2c illustrates a general setup of a configuration performing monostatic sensing with coordination. As explained above, monostatic systems use the same device for transmitting and receiving signals. Coordination in this context refers to the synchronization and cooperation between multiple monostatic sensing systems. This coordination can involve sharing information, synchronizing transmissions, or jointly processing received signals to improve overall performance. Coordination may ensure that the devices work together efficiently, avoiding interference and optimizing sensing performance. In the context of Wi-Fi, this could translate to coordinating multiple Wi-Fi access points or devices to perform sensing tasks collaboratively. That is, in the context of Wi-Fi sensing, coordination refers to the collaboration between multiple Wi-Fi devices or access points for sensing purposes.

Fig. 2d illustrates a general setup of a system performing bistatic sensing with coordination. Bistatic sensing with coordination operates on the principle of transmitting sensing signals from one device and receiving the reflections or disturbances of those signals using another device, wherein multiple of such transmitter-receiver pairs exist. In the illustrated example, one transmitter and two receivers are provided. Similarly to monostatic sensing with coordination, the coordination may involve synchronizing the operation of multiple such transmitter-receiver pairs to ensure coherent and effective sensing. Bistatic sensing with coordination in the Wi-Fi context may involve the synchronized operation of separate transmitting and receiving elements (antennas or devices) to collectively gather information about the environment using Wi-Fi signals. Coordination may ensure that these separate elements work together efficiently, leveraging their combined capabilities for enhanced sensing performance.

Fig. 2e illustrates a general setup of a system performing multistatic sensing. Multistatic sensing relies on the principle of analyzing sensing signals that have interacted with objects or surfaces in the environment. Multiple transmitter and receiver elements are strategically placed across the sensing area to ensure comprehensive coverage. These elements may be stationary or mobile, depending on the application requirements. This approach differs from traditional monostatic or bistatic sensing, where a single transmitter-receiver pair is used. Multistatic sensing may iffer several advantages, including enhanced coverage, improved accuracy, and increased robustness to environmental conditions. The arrangement of transmitter and receiver elements can vary based on factors such as the size of the sensing area, desired coverage, and sensing objectives. Each transmitter emits sensing signals, which are then received by multiple receiver elements after interacting with objects. By analyzing the received signals across multiple elements, it may be possible to extract information about the environment.

Fig. 2f illustrates a general setup of a system performing passive sensing. Passive sensing leverages the presence of signals in the environment, which may be continuously transmitted by transmitters for communication purposes. Rather than actively transmitting signals, passive sensing devices listen to these existing signals and analyze their characteristics to extract information about the environment. These devices typically operate in promiscuous mode, allowing them to capture all signals within their range, regardless of whether they are intended for the device or not. Passive sensing, in particular in Wi-Fi environments, faces several challenges, including privacy concerns. Passive sensing may inadvertently capture sensitive information transmitted over Wi-Fi networks, raising privacy concerns that need to be addressed through appropriate data handling and anonymization techniques.

However, an attacker may also use these system models. The attacker may generate a sensing signal to sense, for example, what is happening behind a wall. In this framework, he could leverage on the existing sensing framework. Alternatively, the attacker may perform passive sensing (e.g. when the legitimate user is performing active sensing while the illegitimate user is doing passive sensing), wherein it might difficult for the legitimate user to detect that the attacker listening.

It is to be noted that the illegitimate usage as illustrated in Figs. 2a to f is different from conventional communication-related attacks. In communication systems, attackers might attempt to learn a key of a Wi-Fi device to gain unauthorized access. However, in Wi-Fi sensing, even a legitimate user may exploit the system for sensing purposes without proper authorization, if no preventive measures are in place.

This disclosure proposes a technique designed to address such unauthorized sensing scenarios.

In particular, for this purpose, privacy-preserving, zone restricted wireless sensing may be enabled by dynamically controlling one of or both of a physical sensing area and user-level access permissions. Unlike prior systems, which lack fine-grained control and may sense individuals or areas unintentionally, embodiments of the disclosure may ensure that wireless devices only operate within authorized zones and/or with user-approved feature sets. This may be achieved, for instance, by adjusting transmission parameters (e.g., beamforming, power, and the like) and/or generating dedicated sensing signals per device, ensuring localized, isolated sensing.

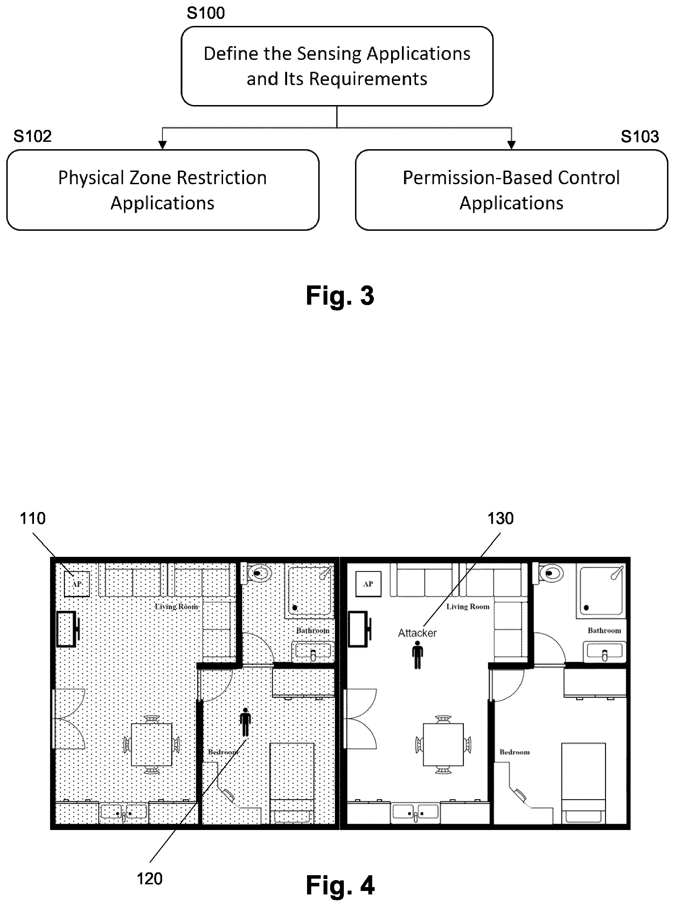

Fig. 3 is a schematic drawing summarizing the approach of the present disclosure. In step S100, a wireless sensing application is categorized as physical zone-restricted and/or permission-based. In other words, it may be determined whether there is a spatial constraint and/or an authorization condition for a wireless sensing operation. Depending on the categorization of the wireless sensing application, the subsequently following processing, algorithms, and/or sensing operations may be adapted accordingly. That is, in step S102, the spatial constraint may be applied when performing a wireless sensing operation. Similarly, in step S103, permission-based control may be applied when performing the wireless sensing operation. For instance, the wireless sensing operation may only be performed if a permission is received by a user. It is to be noted that a wireless sensing application may be both subject to a spatial constraint and subject to an authorization condition.

This dual-layer control may prevent signal leakage, protect user privacy, and improve sensing accuracy. In this respect, it is to be noted that specific hardware might not be required in addition to a conventional wireless sensing apparatus. The present disclosure not only addresses technical challenges of overreach and false detection in prior art but may also ensures compliance with ethical and legal requirements in sensitive environments like healthcare and smart buildings.

In particular, the suggested approach not only accounts for passive sensing attacks, but also for active attacks. Specifically, if a wireless sensing operation is subject to a spatial constraint and/or an authorization requirement, an unauthorized wireless sensing apparatus, e.g. an access point (AP), will be unable to participate in a sensing operation. In other words, the illegitimate wireless sensing apparatus cannot exploit existing signals for sensing, nor can it legally generate new signals under regulations governing commercial wireless sensing apparatuses. According to embodiments of the present disclosure, it may be ensured that only legitimate, authorized devices can perform sensing operations, thereby limiting the risk of privacy violations.

FIG. 4 is a schematic drawing illustrating an environment in which a sensing apparatus 110 may operate. Multiple communication, sensing and joint sensing and communication devices may be active in the illustrated environment. Specifically, an exemplary environment is illustrated, which is a home environment including two apartments located next to each other. In this example, an access point AP 110 as a wireless sensing apparatus 110 for wireless sensing of a target 120 is provided. Further, an attacker 130 may perform illegitimate sensing, either active or passive. An access point AP 110 located in the living room of the left apartment may perform Wi-Fi sensing and thereby obtain information on a person 120 within the bedroom. However, an attacker 130 who is in another apartment (apartment on the right) may sense what is happening in the bedroom as well. For this purpose, the attacker 130 may generate and transmit an additional signal, i.e. perform an active sensing attack. Alternatively, the illegitimate user 130 may use a legitimate user's signal, i.e. perform passive sensing utilizing signals transmitted by the (legitimate) access point AP 110..

In order to prevent illegitimate sensing, embodiments of the present disclosure apply physical zone restrictions and/or permission-based control, as outlined with reference to Fig. 3 above. For example, depending on the sensing application, the wireless sensing apparatus 110 and/or a wireless sensing apparatus operated by the attacker may apply a physical restriction in a sense that wireless sensing signals are transmitted only within the area of the left apartment (hatched area). Further, the wireless sensing apparatus 110 may not participate in any sensing operation outside of the area.

By way of example and without limitation, the transmission of the sensing signal may be confined to the specific area through various techniques that rely on software-controlled operation of existing hardware components, avoiding the need for additional transmission equipment. In one example, directional transmission may be achieved through beamforming, wherein the transmission parameters (e.g., phase and amplitude weights) of the antenna array are configured to concentrate the emitted energy within a defined spatial sector, thereby limiting propagation of the sensing signal to a designated region. In another example, the transmission confinement may be realized by selectively activating only those antenna elements whose radiation patterns collectively focus energy into the target zone, while deactivating or down-weighting others, thereby shaping the transmission footprint without physical reconfiguration. As a further example, frequency hopping or subcarrier selection within an OFDM transmission may be dynamically adjusted to utilize only those frequency components that exhibit favorable propagation characteristics (e.g., low diffraction or attenuation) in the direction of the designated area, effectively biasing the signal energy toward that region. The transmission confinement may also be achieved through environmental-aware signal shaping, wherein the transmitter utilizes pre-learned or real-time feedback on environmental reflections and obstructions to adjust its emission parameters, ensuring that the majority of the sensing signal reaches only the desired area while minimizing spill-over into adjacent spaces. However, it is to be noted that the present disclosure is not limited to any one of the mentioned implementations.

By confining the sensing signals to a specific area, i.e. by applying a spatial constraint to the wireless sensing operation, passive sensing of the attacker 130 may be prevented or at least hindered. Further, by not allowing a wireless sensing apparatus utilized by the attacker to perform the wireless sensing operation outside the specific area, active sensing of the attacker 130 may be prevented or hindered.

In addition or alternatively, the wireless sensing operation may be subject to an authorization condition. That is, the wireless sensing operation may only be performed if a permission by the target 120 has been obtained beforehand.

By way of example and without limitation, a wireless sensing apparatus 110 may obtain authorization from a user/target 120 through various mechanisms designed to ensure secure and informed consent. In one example, the wireless sensing apparatus 110 may be paired with a target's 120 communication apparatus, e.g. a mobile device via Bluetooth, Wi-Fi Direct, or another local wireless protocol, and authorization may be granted through a companion application interface, which provides explicit consent controls. In another example, the target 120 may log in to a secure online account or submit a one-time access token, thereby authorizing the activation of sensing functions for a particular session, device, and/or location. In a further example, the target 120 may provide authorization through physical interaction with the wireless sensing apparatus 110, such as pressing a dedicated button, tapping an NFC card, and/or performing a predefined gesture that is recognized by the system as a form of consent. The wireless sensing apparatus 110 may operate in a presence-based mode, wherein sensing is automatically enabled upon detecting a known user device (e.g., via MAC address or signal fingerprint) within a specified proximity, provided that the user has previously configured consent preferences for such behavior. However, it is to be noted that the present disclosure is not limited to any one of the mentioned implementations.

By performing the wireless sensing operation only when authorization for said wireless sensing operation has been obtained beforehand, illegitimate sensing, e.g. the by attacker 130, may be prevented or at least hindered.

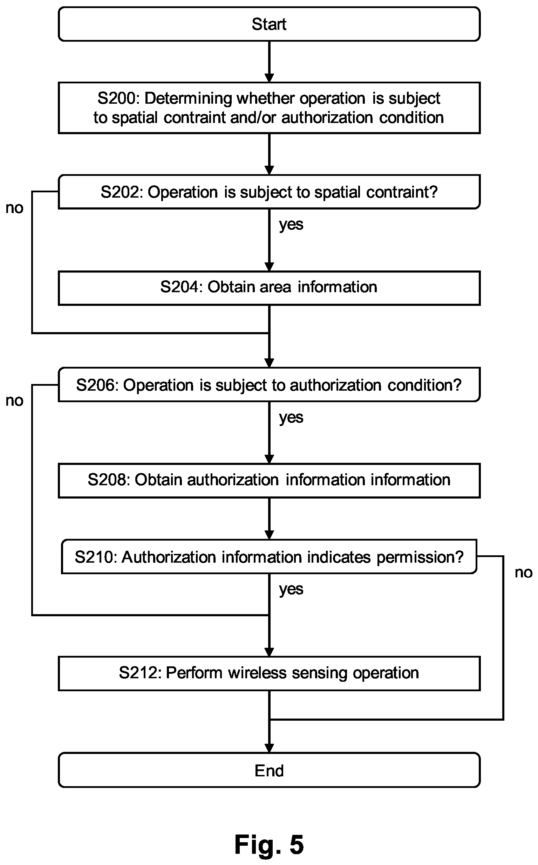

Fig. 5 is a flow diagram illustrating a wireless sensing method according to the present disclosure. In step S200, it is determined whether a wireless sensing operation is subject to a spatial constraint and/or an authorization condition. In step S202, it is determined whether the wireless sensing operation is subject to the spatial constraint. If so (yes in step S202), are information indicating a spatial area is obtained in step S204. If not (no in step S202), the method proceeds to step S206. In step S206, it is determined whether the wireless sensing operation is subject to an authorization condition. If so (yes in step S206), the method proceeds to step S208. In step S208, authorization information is obtained, indicating whether or not wireless sensing of the target is permitted. If the authorization information indicates that wireless sensing is permitted (yes in step S210), the method proceeds to step S212. Similarly, if the wireless sensing operation is not subject to an authorization condition (no in step S206), the method proceeds to step S212. If the authorization information indicates that the wireless sensing operation is not permitted (no in step S210), the method ends. In step S212, the wireless sensing operation is performed, wherein, if the wireless sensing operation is subject to the spatial constraint (yes in step S202), the wireless sensing operation is performed only within the area indicated by the area information.

In other words, provided is a wireless sensing method for wireless sensing of a target (a target may be also referred to as a user).

The method comprises determining whether a wireless sensing operation is subject to a spatial constraint and/or an authorization condition (cf. steps S200, S202, S206).

The term wireless sensing operation refers to a process in which wireless signals are used to detect, monitor, and/or characterize one or more physical targets or environmental features. Such operations may be performed using standard communication signals, such as those emitted by Wi-Fi, Bluetooth, or cellular devices, and may involve analyzing variations in signal properties, such as amplitude, phase, Doppler shift, and/or time of flight, to infer motion, presence, and/or structural characteristics. For example, a wireless sensing operation may involve using Wi-Fi channel state information (CSI) to detect whether a person has entered a room, or to recognize specific human activities such as walking, sitting, and/or falling.

The term spatial constraint refers to a condition that restricts the wireless sensing operation to a defined physical area and/or volume. For instance, a spatial constraint may specify that sensing is permitted only within a particular room or segment of a certain building, thereby excluding adjacent areas from monitoring.

The term authorization condition refers to a requirement that sensing may proceed only upon receiving user consent.

The determination of whether the wireless sensing operation is subject to a spatial constraint and/or an authorization condition may be performed based on a categorization of the wireless sensing operation and/or the context in which it is to be executed. Categorization may refer to a classification of the wireless sensing operation into one or more predefined categories that are each associated with specific constraints and/or conditions. The categorization may be predetermined, defined in advance by system configuration, policy rules, device settings, user profiles, and/or environmental parameters or the like.

For example, a wireless sensing operation may be categorized as "indoor security monitoring," "user presence detection," and/or "gesture recognition," with each category mapped to spatial constraint. The "indoor security monitoring" category may be subject to strict spatial constraints, allowing sensing only in predefined zones, and may also require explicit user authorization. By contrast, a "gesture recognition" category within a personal workspace may be exempt from spatial constraints and may rely on device pairing for implicit authorization. Wireless sensing applications subject to a spatial constraint may include people counting, room occupancy detection, or the like. However, the present disclosure is not limited to any specific wireless sensing application subject to a spatial constraint.

The categorization may further be based on contextual factors such as device location, time of day, signal type, and/or the identity of the requesting application. For instance, if the wireless sensing operation is initiated by a known automation routine (e.g., turning on lights when motion is detected), it may fall into a category where authorization is assumed based on prior configuration. Conversely, a request originating from a third-party service may be categorized as requiring explicit user consent. Wireless sensing applications subject to an authorization condition may include healthcare monitoring, personalized sensing, or the like. However, the present disclosure is not limited to any specific wireless sensing application subject to a spatial constraint.

It is to be noted that a wireless sensing operation may fall into one, both, or none of the mentioned categories. In other words, the wireless sensing operation may be subject to a spatial constraint and/or an authorization condition or neither of these.

The method further comprises obtaining area information indicating a spatial area, if the wireless sensing operation is subject to the spatial constraint (cf. steps S202, S204).

A spatial area refers to a defined physical region in space where the sensing operation is restricted to. This can be a room, a sector of a building, a volume around a target, and/or any other bounded region. Area information denotes the data that defines this spatial area, such as coordinates, dimensions, boundaries, and/or a map reference. For example, if sensing is limited to a certain room, the area information might include the room's floor plan or GPS coordinates.

The method further comprises obtaining authorization information indicating whether or not wireless sensing of the target is permitted, if the wireless sensing operation is subject to the authorization condition (cf. steps S206, S208, S210).

Authorization information refers to data that indicates whether wireless sensing of a specific target is allowed under certain conditions. This information may be binary (e.g., permitted or not permitted) or may include additional parameters such as time limits, user consent, or regulatory constraints. For example, authorization information could be a user's digital consent stored in a database, a policy flag indicating sensing rights for a specific device, or a certificate issued by an authority.

Authorization information can be obtained in several ways. For instance, user consent can be directly obtained via an interface where the user explicitly grants or denies permission for sensing. Additionally, digital certificates or tokens issued by a trusted authority can contain embedded authorization details, which the system verifies before proceeding with sensing.

This may include explicit user interaction (such as pressing a button or accepting a prompt), successful pairing of a registered mobile device, presence detection of a known device, and/or biometric confirmation (such as a voice command or facial recognition). For example, an authorization condition may be satisfied when a user logs into a companion app and activates sensing for a given time period and/or location.

The method further comprises performing the wireless sensing operation, if the wireless sensing operation is not subject to the authorization condition or the authorization information indicates that the wireless sensing of the target is permitted, wherein the wireless sensing operation is performed only within the area indicated by the area information, if the wireless sensing operation is subject to the spatial constraint (cf. step S212).

This may involve limiting where the sensing signal is transmitted, where it may be received, and/or where the target must be located in order for sensing to occur. Spatial constraints may be enforced through beamforming, time-of-flight gating, subcarrier selection, and/or zone-specific signal processing techniques.

For example, for a wireless sensing operation subject to a spatial constraint, the constraint may be given by geographical and/or legal constraints, e.g. government restrictions), which can be used to define restricted areas. The wireless sensing apparatus may be configured or programmed not to perform the sensing operation within the restricted area. For this purpose, signal propagation can be controlled using parameters like beamforming, transmission power, or the like, in order to limit the wireless signal coverage to only the intended areas.

For permission passed control, i.e. a wireless sensing operation subject to an authorization condition, users can provide explicit permission for their data to be sensed and/or processed. For example, in healthcare applications, even if the user is in an authorized zone (i.e. outside a restricted area), consent may still be required before collecting and/or using any personal data. Consent can be obtained in a line-of-sight scenario, where the user is aware of the sensing process. The user can then choose which applications and/or features are allowed to use their data. Without user approval, the system may not be permitted to proceed with sensing.

In an embodiment, the wireless sensing operation is not performed if the authorization information indicates that the wireless sensing of the target is not permitted.

In other words, when the user/target does not provide its permission for the wireless sensing operation, said wireless sensing operation is not performed.

In an embodiment, the wireless sensing operation comprises transmitting a sensing signal, receiving a response signal resulting from the sensing signal interacting with the target, and determining a characteristic of the target using the response signal.

The term "sensing signal" may refer to a wireless signal that is transmitted by the wireless sensing apparatus for the purpose of detecting and/or monitoring the presence, position, movement, and/or other properties of a target (an object and/or a person) in a monitored area. The sensing signal typically comprises an electromagnetic wave, such as a radio frequency (RF), microwave, and/or millimeter wave signal, which propagates through the environment and interacts with one or more objects. Upon such interaction, the signal may be reflected, scattered, refracted, and/or otherwise altered, allowing information about the environment and/or the target to be derived based on analysis of the altered signal.

The altered signal that is received as a result of the sensing signal's interaction with the environment is referred to as a "response signal." The response signal may carry information that can be evaluated to determine one or more characteristics of the target and/or environment. The response signal may be received by the same entity that transmitted the sensing signal (monostatic sensing) or by a separate entity (bistatic or multistatic sensing). The characteristics derived from the response signal may include, for example, the presence, position, orientation, speed, and/or motion trajectory of a person or object, or other physical and/or behavioral features relevant to the sensing task.

The term "interaction" as used herein encompasses any form of influence or effect that modifies the sensing signal during its propagation, particularly in a way that enables detection and/or inference of the target. This may include physical interaction with the target, such as reflection , scattering, and/or absorption. Additionally, interaction may include responses from devices or systems that are configured to actively or passively react to the sensing signal. For example, a wireless communication apparatus such as a smart device may detect the sensing signal and respond by emitting a predefined signal.

A "characteristic" may refer to a measurable or inferable property of the target that can be determined based on the response signal. This may includes static characteristics such as position, size, and/or shape, as well as dynamic characteristics such as speed, acceleration, and/or gesture. The characteristic may also encompass qualitative attributes, such as presence or absence, or behavioral patterns derived from time-dependent signal analysis.

In an embodiment, the wireless sensing operation comprises, if the wireless sensing operation is subject to the spatial constraint: transmitting the sensing signal only within the area indicated by the area information by adjusting transmission parameters.

For example, the transmission parameters include one or more of beamforming parameters, a transmit power, signal phase parameters, signal frequency parameters, and antenna array configuration parameters

In other words, if the wireless sensing operation is subject to the spatial constraint, the sensing signal is transmitted only within a designated area as indicated by the area information. To implement such transmission confinement, one or more transmission parameters of the sensing signal are adjusted accordingly. These transmission parameters may relate to the spatial, spectral, and temporal properties of the emitted sensing signal and may allow the system to direct and/or confine the sensing activity to the area of interest.

The term "beamforming parameters" may refers to parameters that define the directionality of the transmitted sensing signal. Beamforming is a signal processing technique used in antenna arrays whereby the signal is transmitted in a focused beam rather than uniformly in all directions. By adjusting beamforming weights applied to the individual antenna elements, the sensing signal can be spatially directed toward an intended area, e.g. the area indicated by the area information, which may allow for targeting of the sensing region while minimizing leakage of the signal into adjacent areas.

The "transmit power" may relate to a power level at which the sensing signal is emitted. By controlling the transmit power, the range of the sensing signal can be regulated. For example, reducing the transmit power can reduce the sensing range and, therefore, the sensing activity to a smaller region. Similarly, increasing the transmit power may increase the sensing range and extend the wireless sensing operation to a larger area.

"Signal phase parameters" may relate to relative phase shifts applied in particular in multi-antenna systems. These phase adjustments may be used, for example, in conjunction with beamforming to achieve interference patterns shapting the spatial emission area of the signal.

"Signal frequency parameters" may relate to the selection and/or adjustment of the frequency or frequency band used for the sensing signal. Since different frequencies may exhibit different propagation characteristics, depending on the environment, a selection of a frequency may be utilized for confining the wireless sensing signal to the intended area indicated by the area information.

"Antenna array configuration parameters" may relate to the physical and/or logical arrangement of antenna elements used for transmitting the sensing signal. This may include the number of antenna elements and/or their spatial layout. Modifying the antenna array configuration may allow the wireless sensing apparatus to vary the direction, gain, and the like of the sensing signal.

By adjusting one or more of the aforementioned transmission parameters, the wireless sensing system can dynamically restrict the sensing signal to the area indicated by the area information.

In an embodiment, the user is prompted to provide the authorization information, if the wireless sensing operation is subject to the authorization condition. Further, the authorization information may be obtained by a user input or by receiving an authorization signal carrying the authorization information.

In other words, when a permission from a user for wireless sensing is required, the user may be requested to provide his consent or refusal of the wireless sensing operation. This may be performed, for example, by displaying a prompt on a display device. However, the present disclosure is not limited thereto, and the prompt may be output by a speaker or the like. For this purpose, the wireless sensing apparatus may include an output unit (e.g. display, speaker, or the like). The user may provide the authorization information, i.e. his consent or refusal, for example, via a touchscreen, voice recognition, a dedicated button, or the like. For this purpose, the wireless sensing apparatus may include an output unit. It is to be noted that the input unit and the output unit may be combined as an input/output unit like a touchscreen, combining a display and a touch input device. Alternatively, the prompt may be output in the framework of a prompt signal transmitted to a wireless communication apparatus of the user, e.g. a smartphone, a terminal, a tablet computer or the like. The wireless communication apparatus may transmit the authorization signal carrying the authorization information to the wireless communication apparatus.

In an embodiment, it is determined whether the wireless sensing operation is subject to the spatial constraint and/or the authorization request by determining whether the wireless sensing operation is included in a first predetermined category of first sensing operations and/or in a second predetermined category of second sensing operations, wherein the first sensing operations are subject to a spatial constraint, and the second sensing operations are subject to an authorization condition.

In other words, the wireless sensing operation to be performed may be one of a plurality of potential wireless sensing operations, which are associated to categories including the first category and the second category. The potential/possible wireless sensing operations included in the first category are subject to the spatial constraint and the wireless sensing operations included in the second category are subject to the authorization condition.

In this respect, it is to be noted that a wireless sensing operation may be included in the first category and the second category. Such a wireless sensing operation is subject to a spatial constraint and the authorization condition. Further, it is to be noted that a wireless sensing operation may not be included in any of the first and the second category. Such a wireless sensing operation is neither subject to a spatial constraint nor to an authorization condition.

Further, the categorization of wireless sensing operations may be predetermined, set according to user preferences, or configured according to system requirements, legal constraints, or the like.

In an embodiment, each of the first sensing operations is associated with respective area information indicating a spatial area.

In other words, a sensing operation included in the first category, i.e. a sensing operation subject to a spatial constraint, may be associated with the respective area information. That is, for each first wireless sensing operation, a respective area for wireless sensing may be determined and utilized in the wireless sensing operation. For example, the association of first wireless sensing operations with respective area information may be predetermined, set according to user preferences, configured according to system requirements, legal constraints, or the like.

In an embodiment, the first sensing operations include a people counting operation, a room occupancy detection operation, a human presence detection operation, a motion detection operation, and/or a wireless sensing operation within a restricted area.

A people counting operation is a wireless sensing operation directed at determining the number of persons located within a defined area. This wireless sensing operation may involve analyzing characteristics of the response signal, such as the number and strength of reflections or Doppler signatures, in order to estimate how many individuals are present.

A room occupancy detection operation is a wireless sensing operation used to determine whether a particular room, space, or area is currently occupied by one or more persons. Unlike people counting, the focus lies on the determination as to whether the area is occupied or unoccupied, and does not necessarily include quantifying the number of persons.

A human presence detection operation may relate to the detection of at least one human being within the sensing area. This may involve identifying movements and may also include detection under conditions where the person is stationary.

A motion detection operation is a wireless sensing operation for determination as to whether a motion is occurring within the sensing area, and may also provide information about the type, direction, and/or speed of the motion. Motion detection may based on temporal variations in the response signal, such as Doppler shifts, phase changes, and/or variation in signal strength.

A wireless sensing operation within a restricted area is a sensing operation constrained to a spatially defined area. The restriction may be imposed through the area information and implemented via transmission parameter control, as described above.

In an embodiment, the second sensing operations include a healthcare monitoring operation, a personalized sensing operation, and/or a fall detection operation.

A healthcare monitoring operation may be a wireless sensing operation for monitoring indicators that are relevant to an individual's health status. This may include, for example, detecting respiration rate, heart rate, sleep patterns, and/or changes in mobility using the response signal. The healthcare monitoring operation may be implemented in residential environments, hospitals, and/or assisted living facilities to enable monitoring of patients or elderly persons.

A personalized sensing operation may refer to a wireless sensing operation configured for a specific target. This operation may include the identification of the target, e.g. by user input, and corresponding adaptation of sensing parameters.

A fall detection operation may be a wireless sensing operation for detection of fall events of a person within the sensing area. This operation may involve recognizing rapid and abnormal motion patterns followed by a sudden stop, which may be considered to represent a characteristic of a fall.

In general, according to a domain of an application i.e. a class of the wireless sensing operation, a wireless sensing operation may be categorized as being a first wireless sensing operation and/or a second wireless sensing operation. Said class may include the application in smart buildings (e.g. for occupancy detection or energy optimization), in healthcare (e.g. patient monitoring, fall detection), in access control and security, in retail analysis, in care of the elderly or living environments. Further classes/application domains may also include automotive environments (e.g., in-cabin monitoring), industrial loT, or public infrastructure monitoring.

Based on the application domain/class of the wireless sensing operation, the application requirements are specified. Operational and/or privacy requirements may be related to a required sensing accuracy, area coverage constraints, the need for user consent, data processing and retention policies, or the like. The requirements may vary based on regulation, environmental complexity (e.g. highly reflective indoor areas), and/or user specific customization.

As explained in great detail further above, the wireless sensing operations are broadly categorized as sensing operations subject to a spatial constraint and/or an authorization condition. It is important to note that a single application/wireless sensing operation may fall under both categories. However, the present disclosure is not limited to said two categories. Additional categories or sub-categories may be defined, such as time-based restrictions, priority-based sensing operations, and/or group-consent sensing operations.

According to embodiments of the present disclosure, the wireless sensing apparatus adapts its algorithms and operations for sensing depending on whether a spatial restriction, an authorization condition, or both apply. For instance, the wireless sensing operation may be performed only within a specified are and/or only if authorized. However, the present disclosure is not limited thereto, and, for example, a basic wireless sensing operation may be always permitted, wherein sensitive data is not sensed.

In some configurations, each sensing device may rely solely on its own signal transmissions, meaning it cannot leverage signals from neighboring devices or ambient traffic. Under this constraint, devices must generate dedicated signals for each sensing task or target area. With this, sensing may become localized and isolated, requiring intentional signal emission for each operation. However, cooperative or non-cooperative signal environments may also be used, meaning that wireless sensing apparatuses may communicate with each other and share the sensing operation and/or its results.

It is to be noted that dedicated sensing signals can take the form of Wi-Fi preambles, OFDM pilots, frequency-hopping beacons, and/or entirely custom RF pulses.

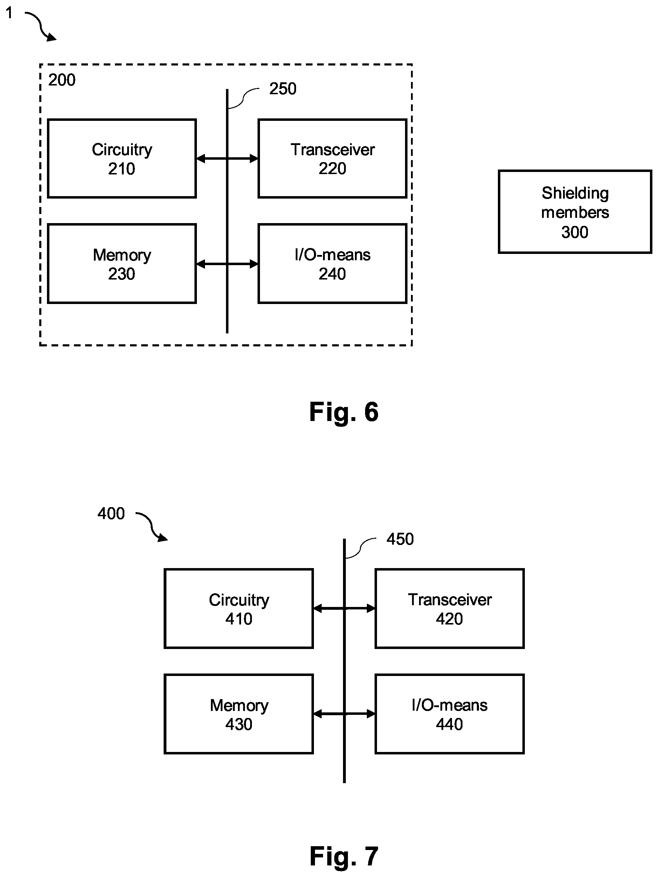

Fig. 6 is block diagram illustrating the structure of a wireless sensing system 1 according to the present disclosure.

The system 1 comprises a wireless sensing apparatus 200 for wireless sensing of a target. The wireless sensing apparatus 200 comprises a transceiver 220 and circuitry 210. The circuitry 210 is configured to determine whether a wireless sensing operation is subject to a spatial constraint and/or an authorization condition, and to obtain area information indicating a spatial area, if the wireless sensing operation is subject to the spatial constraint. Further, the circuitry 210 is configured to obtain authorization information indicating whether or not wireless sensing of the target is permitted, if the wireless sensing operation is subject to the authorization condition, and to perform the wireless sensing operation by controlling the transceiver 220, if the wireless sensing operation is not subject to the authorization condition or the authorization information indicates that the wireless sensing of the target is permitted. The wireless sensing operation is performed only within the area indicated by the area information, if the wireless sensing operation is subject to the spatial constraint.

It is to be noted that the wireless sensing apparatus 200 may be configured to perform any operation and/or method described above, using the circuitry 210 for any determination, obtaining, calculation, or the like, and the transceiver 220 being controlled by the circuitry 210 in the wireless sensing operation.

It is further to be noted that the wireless sensing system 1 may be formed by the wireless sensing apparatus 200. Further, the wireless sensing apparatus 200 may be formed by one or more entities, which are communicatively connected to each other in a wireless or wired manner. The circuitry may be formed by any computing device, like a CPU, for example. The transceiver 220 may include a transmitter and a receiver as separate means, for example. The wireless sensing apparatus may be implemented as an access point, a wireless joint communication and sensing system, a sensing device, a base station, or the like.

The components of the wireless sensing apparatus 200 may communicate with each other, for instance, via a communication bus 250.

The wireless sensing apparatus 200 may, optionally, comprise output means 240 configured to prompt a user to provide the authorization information, if the wireless sensing operation is subject to the authorization condition, as described above. The wireless communication apparatus may further, optionally, comprise input means configured to receive the authorization information by a user input, as described above. The output means and the input means may be implemented as separate entities, like a display and a keyboard, a mouse, a button, or the like, or as an input/output means 240 like a touchscreen, for example.

The wireless sensing apparatus 200 may, optionally, comprise memory configured to store category information indicating a first predetermined category of fist sensing operations and a second predetermined category of second sensing operations, wherein the first sensing operations are subject to a spatial constraint, and the second sensing operations are subject to an authorization condition, as described above. The circuitry 210 may be configured to determine whether the wireless sensing operation is subject to the spatial constraint and/or the authorization request by determining whether the wireless sensing operation is included in a first predetermined category of first sensing operations and/or in a second predetermined category of second sensing operations, as described above.

The transceiver 220 may comprise a directional antenna, wherein the circuitry 210 is configured to perform the wireless sensing operation by controlling the transceiver 220 using the directional antenna.

For example, when the wireless sensing operation is subject to a spatial constraint, the circuitry 220 may confine the sensing signal to the area indicated by the area information by controlling the directional antenna to transmit the sensing signal only within the area.

Further, optionally, the wireless sensing system 1 may comprise shielding members 300.

The shielding members 300 may be implemented as physical structures or materials that are configured to confine the sensing signals transmitted by the transceiver 220 during the wireless sensing operation to the area according to the area information. These shielding members 300 may serve to restrict the propagation of electromagnetic waves beyond the intended sensing area. Thereby, the privacy and/or security in the sensing system 1 may be improved.

The shielding members 300 may operate by absorbing, reflecting, and/or attenuating the sensing signal, depending on the material properties. Suitable materials may include, for example, metals, metal-coated films, or RF-absorbing materials. The shielding members 300 may be permanently integrated into the environment or may be selectively removable, such as movable screens, curtains or panels. For example, the shielding members 300 may be mounted around a certain room to prevent signal leakage into adjacent zones, or an enclosure by shielding member 300 may be formed around an area for healthcare monitoring.

It goes without saying that the shielding members 300 may be used in combination with other aspects for privacy/security improved as described herein, such as beamforming or the like, to further enhance the confinement of the sensing signal. Through the use of such shielding members 300, the system can achieve more precise and localized sensing, reduce the risk of undesired signal detection, and comply with technical, regulatory, and/or privacy-related constraints associated with the wireless sensing operations.

Fig. 7 is a block diagram illustrating the structure of a wireless communication apparatus 400. The wireless communication apparatus 400 may be a device of a user who represents a target for the wireless sensing operation. The wireless communication apparatus comprises circuitry 410, a transceivers 420, a memory 430 and input/output means 440, which may communicate with each other via a communication bus 450.

The wireless communication apparatus 400 may be a smart device, a smart phone, a tablet computer, a user equipment, or the like. The wireless communication apparatus 400 may be used for communication with the wireless sensing apparatus 200 and, in particular, for providing the authorization information from the user to the wireless sensing apparatus 200. Specifically, the transceiver 420 may be configured to receive a prompt signal from the wireless sensing apparatus 200 and transmit an authorization signal to the wireless sensing apparatus 200. The authorization signal may carry the authorization information indicating whether or not wireless sensing of the user/the target is permitted.

For this purpose, the input/output means 440, which may be a touchscreen, a display and a keyboard, or the like, may prompt the user to input his permission or refusal of the wireless sensing operation. The authorization signal may carry the authorization information according to the user input.

The memory 430 may store data, programs, or the like, to be used by the circuitry 410 when performing operations like controlling the transceiver 420 and/or the input/output means 440.

The above described embodiments of the disclosure and some exemplary embodiments may provide one or more of the following advantages.

Embodiments according to the disclosure may provide a flexible and privacy-aware wireless sensing framework, offering several technical, security, and practical advantages across a wide range of application scenarios. These advantages stem from the unique combination of physical zone restriction, permission-based sensing control, and/or per-device signal generation.

The present disclosure may provide enhanced privacy protection. For instance, due to user-centric control, users may have the ability to grant or deny permission for specific features or applications, aligning with modern data protection regulations (e.g., GDPR, HIPAA). Further, by Line-of-sight or interactive consent mechanisms, informed and voluntary participation may be achieved. Still further, by per-device signal isolation, unauthorized data collection via neighbouring access points or passive eavesdroppers may be prevented.

The present disclosure may further provide precise physical zone restrictions. For this purpose, the system may confine wireless sensing activity to clearly defined spatial boundaries, avoiding leakage into unintended areas. For example, by using transmission parameters (e.g., beamforming, power control) and environmental knowledge (e.g., floorplans, regulations), physical limits may be enforced. In addition, sensing relevance may be improved by focusing only on the intended regions (e.g., specific rooms, entry zones). Thereby, noise and interference may be reduced.

The present disclosure may further provide improved sensing accuracy by minimizing false positives by excluding signal reflections or detections from adjacent areas or through walls. Further, signal confinement and dedicated transmissions may improve spatial resolution and sensitivity. This might allow for accurate people counting, occupancy detection, and/or behavioral sensing in real-world environments with minimal ambiguity.

The present disclosure may further provide modular and adaptive application support, since the system may supports a wide variety of application domains, including healthcare, smart buildings, security, retail, and more. Applications/wireless sensing operations can be classified and configured individually based on access requirements (e.g., zone-restricted vs. consent-driven). This may offer context-aware sensing, dynamically adapting to user presence, permissions, and/or location.

The present disclosure may provide some or all of the advantages without the need for additional Hardware, since existing Wi-Fi or other RF devices may be utilized for both communication and sensing tasks. This may enable a cost-effective deployment and easy integration into current network infrastructure. Further, complexity may be reduced, making it accessible for commercial, residential, and enterprise environments.

Further, the present disclosure may provide for sensing operations in compliance with regulations and/or in alignment with ethical considerations. The built-in permission mechanisms may help meeting regulatory and ethical standards for privacy and data handling. Embodiments of the disclosure may further support auditable consent flows and adaptable sensing policies to align with user preferences and legal requirements.

This disclosure can be used in any kind of device that is used for wireless sensing. For instance, health monitoring, activity classification, gesture recognition, people counting, through the wall sensing, emotion recognition, attention monitoring, keystrokes recognition, drawing in the air, imaging, step counting, speed estimation, sleep detection, traffic monitoring, smoking detection, metal detection, sign language recognition, humidity estimation, wheat moisture detection, fruit ripeness detection, sneeze sensing, etc. Besides these applications, the disclosure can be used in joint sensing and communication (JSC) technologies. This disclosure can also be used for sensing applications to support communication applications, like obstacle tracking for beam management. Therefore, devices that can utilize this invention could be smart homes/offices/cities/factories/etc. devices, like electrical kitchen appliances, television sets, smart bus stops, smart office equipment (printers, etc.), lighting systems, WLAN and Wi-Fi devices, etc. Other devices could be stand-alone wireless sensors, such as heart-rate monitors, motion detectors, smart watches, etc.

Some of the examples in this disclosure are based on wireless and wired local area network (LAN) communication according to the Institute of Electrical and Electronics Engineers (IEEE) 802.11 wireless standards, and the IEEE 802.3 Ethernet standards. However, the described implementations may be implemented in any device, system or network that is capable of transmitting and receiving RF signals according to any of the wireless communication standards, including any of the IEEE 802.11 standards, the Bluetooth standard, code division multiple access (CDMA), wideband CDMA (W-CDMA), frequency division multiple access (FDMA), time division multiple access (TDMA), Terrestrial Trunked Radio (TETRA), Global System for Mobile communications (GSM), General Packet Radio Service (GPRS), Enhanced Data GSM Environment (EDGE), Evolution Data Optimized (EV-DO), 1xEV-DO, EV-DO Rev A, EV-DO Rev B, High Speed Packet Access (HSPA), High Speed Downlink Packet Access (HSDPA), High Speed Uplink Packet Access (HSUPA), Evolved High Speed Packet Access (HSPA+), Long Term Evolution (LTE), or other known signals that are used to communicate within a wireless, cellular or loT network, such as a system utilizing 3G, 4G, or 5G, or further implementations thereof, technology.

### Implementations in software and hardware

The methodologies described herein may be implemented by various means depending on the application. For example, these methodologies may be implemented in hardware, operation system, firmware, software, or any combination of two or all of them. For a hardware implementation, any processing circuitry may be used, which may include one or more processors. For example, the hardware may include one or more of application-specific integrated circuits (ASICs), digital signal processors (DSPs), digital signal processing devices (DSPDs), programmable logic devices (PLDs), field-programmable gate arrays (FPGAs), processors, controllers, any electronic devices, or other electronic circuitry units or elements designed to perform the functions described above.

If implemented as program code, the functions performed by the wireless sensing apparatus may be stored as one or more instructions or code on a non-transitory computer-readable storage medium such as the memory 230 or any other type of storage. The computer-readable media includes physical computer storage media, which may be any available medium that can be accessed by the computer, or, in general by the circuitry 210. Such computer-readable media may comprise RAM, ROM, EEPROM, optical disk storage, magnetic disk storage, semiconductor storage, or other storage devices. Some particular and non-limiting examples include compact disc (CD), CD-ROM, laser disc, optical disc, digital versatile disc (DVD), Blu-ray (BD) disc, or the like. Combinations of different storage media are also possible - in other words, distributed and heterogeneous storage may be employed.

The embodiments and exemplary implementations mentioned above show some non-limiting examples. It is understood that various modifications may be made without departing from the claimed subject matter. For example, modifications may be made to adapt the examples to new systems and scenarios without departing from the central concept described herein.

### Selected embodiments and examples

Summarizing, methods, techniques, apparatuses and systems are described for wireless sensing of a target.

According to a first aspect, provided is a wireless sensing method for wireless sensing of a target, comprising determining whether a wireless sensing operation is subject to a spatial constraint and/or an authorization condition; obtaining area information indicating a spatial area, if the wireless sensing operation is subject to the spatial constraint; obtaining authorization information indicating whether or not wireless sensing of the target is permitted, if the wireless sensing operation is subject to the authorization condition; and performing the wireless sensing operation, if the wireless sensing operation is not subject to the authorization condition or the authorization information indicates that the wireless sensing of the target is permitted, wherein the wireless sensing operation is performed only within the area indicated by the area information, if the wireless sensing operation is subject to the spatial constraint.

In an embodiment, the wireless sensing operation is not performed if the authorization information indicates that the wireless sensing of the target is not permitted.

In an embodiment, the wireless sensing operation comprises: transmitting a sensing signal; receiving a response signal resulting from the sensing signal interacting with the target; and determining a characteristic of the target using the response signal.

In an embodiment, the wireless sensing operation comprises, if the wireless sensing operation is subject to the spatial constraint: transmitting the sensing signal only within the area indicated by the area information by adjusting transmission parameters.

In an embodiment, the transmission parameters include one or more of beamforming parameters, a transmit power, signal phase parameters, signal frequency parameters, and antenna array configuration parameters.

In an embodiment, the method comprises, if the wireless sensing operation is subject to the authorization condition: prompting a user to provide the authorization information, wherein the authorization information is obtained by a user input or by receiving an authorization signal carrying the authorization information.

In an embodiment, it is determined whether the wireless sensing operation is subject to the spatial constraint and/or the authorization request by determining whether the wireless sensing operation is included in a first predetermined category of first sensing operations and/or in a second predetermined category of second sensing operations, wherein the first sensing operations are subject to a spatial constraint, and the second sensing operations are subject to an authorization condition.

In an embodiment, each of the first sensing operations is associated with respective area information indicating a spatial area.

In an embodiment, the first sensing operations include a people counting operation, a room occupancy detection operation, a human presence detection operation, a motion detection operation, and/or a wireless sensing operation within a restricted area.

In an embodiment, the second sensing operations include a healthcare monitoring operation, a personalized sensing operation, and/or a fall detection operation.

According to a second aspect, provided is a wireless sensing apparatus for wireless sensing of a target, comprising a transceiver; and circuitry configured to determine whether a wireless sensing operation is subject to a spatial constraint and/or an authorization condition; obtain area information indicating a spatial area, if the wireless sensing operation is subject to the spatial constraint; obtain authorization information indicating whether or not wireless sensing of the target is permitted, if the wireless sensing operation is subject to the authorization condition; and perform the wireless sensing operation by controlling the transceiver, if the wireless sensing operation is not subject to the authorization condition or the authorization information indicates that the wireless sensing of the target is permitted, wherein the wireless sensing operation is performed only within the area indicated by the area information, if the wireless sensing operation is subject to the spatial constraint.

In an embodiment, the circuitry is configured not to perform the wireless sensing operation if the authorization information indicates that the wireless sensing of the target is not permitted.

In an embodiment, the wireless sensing operation comprises: transmitting a sensing signal; receiving a response signal resulting from the sensing signal interacting with the target; and determining a characteristic of the target using the response signal.

In an embodiment, the wireless sensing operation comprises, if the wireless sensing operation is subject to the spatial constraint: transmitting the sensing signal only within the area indicated by the area information by adjusting transmission parameters.

In an embodiment, the transmission parameters include one or more of beamforming parameters, a transmit power, signal phase parameters, signal frequency parameters, and antenna array configuration parameters.

In an embodiment, the wireless sensing apparatus comprises output means configured to prompt a user to provide the authorization information, if the wireless sensing operation is subject to the authorization condition; and input means configured to receive the authorization information by a user input.

In an embodiment, the circuitry is configured to determine whether the wireless sensing operation is subject to the spatial constraint and/or the authorization request by determining whether the wireless sensing operation is included in a first predetermined category of first sensing operations and/or in a second predetermined category of second sensing operations, wherein the first sensing operations are subject to a spatial constraint, and the second sensing operations are subject to an authorization condition.

In an embodiment, the wireless sensing apparatus comprises memory configured to store category information indicating a first predetermined category of fist sensing operations and a second predetermined category of second sensing operations, wherein the first sensing operations are subject to a spatial constraint, the second sensing operations are subject to an authorization condition, and the circuitry is configured to determine whether the wireless sensing operation is subject to the spatial constraint and/or the authorization request by determining whether the wireless sensing operation is included in a first predetermined category of first sensing operations and/or in a second predetermined category of second sensing operations.

In an embodiment, each of the first sensing operations is associated with respective area information indicating a spatial area.

In an embodiment, the first sensing operations include a people counting operation, a room occupancy detection operation, a human presence detection operation, a motion detection operation, and/or a wireless sensing operation within a restricted area.

In an embodiment, the second sensing operations include a healthcare monitoring operation, a personalized sensing operation, and/or a fall detection operation.

According to some embodiments, the circuitry and/or the transceiver is embedded in an integrated circuit (IC).

According to a third aspect, provided is a wireless sensing system, comprising the wireless sensing apparatus according to the second aspect or any of its embodiments; and shielding members configured to confine sensing signals transmitted by the transceiver in the wireless sensing operation to the spatial area.

Still further, a computer program is provided, stored on a non-transitory medium, and comprising code instructions which when executed by a computer or by a processing circuitry, performs steps of any of the above-mentioned methods.

Any of the apparatuses of the present disclosure may be embodied on an integrated chip.

Any of the above-mentioned embodiments and exemplary implementations may be combined.

Although the disclosed subject matter has been described in detail for the purpose of illustration based on what is currently considered to be the most practical and preferred embodiments, it is to be understood that such detail is solely for that purpose and that the disclosed subject matter is not limited to the disclosed embodiments, but, on the contrary, is intended to cover modifications and equivalent arrangements that are within the spirit and scope of the appended claims. For example, it is to be understood that the presently disclosed subject matter contemplates that, to the extent possible, one or more features of any embodiment can be combined with one or more features of any other embodiment.

## Claims

1. A wireless sensing method for wireless sensing of a target, comprising
determining whether a wireless sensing operation is subject to a spatial constraint and/or an authorization condition;
obtaining area information indicating a spatial area, if the wireless sensing operation is subject to the spatial constraint;
obtaining authorization information indicating whether or not wireless sensing of the target is permitted, if the wireless sensing operation is subject to the authorization condition; and
performing the wireless sensing operation, if the wireless sensing operation is not subject to the authorization condition or the authorization information indicates that the wireless sensing of the target is permitted, wherein
the wireless sensing operation is performed only within the area indicated by the area information, if the wireless sensing operation is subject to the spatial constraint.

2. The wireless sensing method according to claim 1, wherein
the wireless sensing operation is not performed if the authorization information indicates that the wireless sensing of the target is not permitted.

3. The wireless sensing method according to claim 1 or 2, wherein the wireless sensing operation comprises:
transmitting a sensing signal;
receiving a response signal resulting from the sensing signal interacting with the target; and
determining a characteristic of the target using the response signal.

4. The wireless sensing method according to claim 3, wherein the wireless sensing operation comprises, if the wireless sensing operation is subject to the spatial constraint:
transmitting the sensing signal only within the area indicated by the area information by adjusting transmission parameters.

5. The wireless sensing method according to claim 4, wherein
the transmission parameters include one or more of beamforming parameters, a transmit power, signal phase parameters, signal frequency parameters, and antenna array configuration parameters.

6. The wireless sensing method according to any one of claims 1 to 5, comprising, if the wireless sensing operation is subject to the authorization condition:
prompting a user to provide the authorization information, wherein
the authorization information is obtained by a user input or by receiving an authorization signal carrying the authorization information.

7. The wireless sensing method according to any one of claims 1 to 6, wherein
it is determined whether the wireless sensing operation is subject to the spatial constraint and/or the authorization request by
determining whether the wireless sensing operation is included in a first predetermined category of first sensing operations and/or in a second predetermined category of second sensing operations, wherein
the first sensing operations are subject to a spatial constraint, and
the second sensing operations are subject to an authorization condition.

8. The wireless sensing method according to claim 7, wherein
each of the first sensing operations is associated with respective area information indicating a spatial area.

9. The wireless sensing method according to claim 7 or 8, wherein
the first sensing operations include a people counting operation, a room occupancy detection operation, a human presence detection operation, a motion detection operation, and/or a wireless sensing operation within a restricted area.

10. The wireless sensing method according to any one of claims 7 to 9, wherein
the second sensing operations include a healthcare monitoring operation, a personalized sensing operation, and/or a fall detection operation.

11. A wireless sensing apparatus for wireless sensing of a target, comprising a transceiver; and
circuitry configured to
determine whether a wireless sensing operation is subject to a spatial constraint and/or an authorization condition;
obtain area information indicating a spatial area, if the wireless sensing operation is subject to the spatial constraint;
obtain authorization information indicating whether or not wireless sensing of the target is permitted, if the wireless sensing operation is subject to the authorization condition; and
perform the wireless sensing operation by controlling the transceiver, if the wireless sensing operation is not subject to the authorization condition or the authorization information indicates that the wireless sensing of the target is permitted, wherein the wireless sensing operation is performed only within the area indicated by the area information, if the wireless sensing operation is subject to the spatial constraint.

12. The wireless sensing apparatus according to claim 11, comprising
output means configured to prompt a user to provide the authorization information, if the wireless sensing operation is subject to the authorization condition; and
input means configured to receive the authorization information by a user input.

13. The wireless sensing apparatus according to claim 11 or 12, comprising
memory configured to store category information indicating a first predetermined category of fist sensing operations and a second predetermined category of second sensing operations, wherein
the first sensing operations are subject to a spatial constraint,
the second sensing operations are subject to an authorization condition, and
the circuitry is configured to determine whether the wireless sensing operation is subject to the spatial constraint and/or the authorization request by
determining whether the wireless sensing operation is included in a first predetermined category of first sensing operations and/or in a second predetermined category of second sensing operations.

14. The wireless sensing apparatus according to any one of claims 11 to 13, wherein
the transceiver comprises a directional antenna; and
the circuitry is configured to perform the wireless sensing operation by controlling the transceiver using the directional antenna.

15. A wireless sensing system, comprising
the wireless sensing apparatus according to any one of claims 11 to 14; and
shielding members configured to confine sensing signals transmitted by the transceiver in the wireless sensing operation to the spatial area.

## Amended claims

### Amended claims in accordance with Rule 137(2) EPC.

1. A wireless sensing method for wireless sensing of a target, comprising
determining (S206) whether a wireless sensing operation is subject to an authorization condition;
obtaining (S208) authorization information indicating whether or not wireless sensing of the target is permitted, if the wireless sensing operation is subject to the authorization condition; and
performing (S212) the wireless sensing operation, if the wireless sensing operation is not subject to the authorization condition or the authorization information indicates that the wireless sensing of the target is permitted, wherein the wireless sensing operation comprises:
transmitting a sensing signal;
receiving a response signal resulting from the sensing signal interacting with the target; and
determining a characteristic of the target using the response signal;
**characterized by**
determining (S202) whether the wireless sensing operation is subject to a spatial constraint, wherein the spatial constraint is a condition that restricts the wireless sensing operation to a spatial area;
obtaining (S204) area information indicating the spatial area, if the wireless sensing operation is subject to the spatial constraint, wherein
the wireless sensing operation is performed (S212) only within the area indicated by the area information, if the wireless sensing operation is subject to the spatial constraint, by transmitting the sensing signal only within the area indicated by the area information by adjusting transmission parameters.

2. The wireless sensing method according to claim 1, wherein
the wireless sensing operation is not performed if the authorization information indicates that the wireless sensing of the target is not permitted.

3. The wireless sensing method according to claim 1 or 2, wherein
the transmission parameters include one or more of beamforming parameters, a transmit power, signal phase parameters, signal frequency parameters, and antenna array configuration parameters.

4. The wireless sensing method according to any one of claims 1 to 3, comprising, if the wireless sensing operation is subject to the authorization condition:
prompting a user to provide the authorization information, wherein
the authorization information is obtained by a user input or by receiving an authorization signal carrying the authorization information.

5. The wireless sensing method according to any one of claims 1 to 4, wherein
it is determined (S202, S206) whether the wireless sensing operation is subject to the spatial constraint and/or the authorization request by
determining whether the wireless sensing operation is included in a first predetermined category of first sensing operations and/or in a second predetermined category of second sensing operations, wherein
the first sensing operations are subject to a spatial constraint, and
the second sensing operations are subject to an authorization condition.

6. The wireless sensing method according to claim 5, wherein
each of the first sensing operations is associated with respective area information indicating a spatial area.

7. The wireless sensing method according to claim 5 or 6, wherein
the first sensing operations include a people counting operation, a room occupancy detection operation, a human presence detection operation, a motion detection operation, and/or a wireless sensing operation within a restricted area.

8. The wireless sensing method according to any one of claims 5 to 7, wherein
the second sensing operations include a healthcare monitoring operation, a personalized sensing operation, and/or a fall detection operation.

9. A wireless sensing apparatus for wireless sensing of a target, comprising
a transceiver (220); and
circuitry (210) configured to
determine whether a wireless sensing operation is subject to an authorization condition;
obtain authorization information indicating whether or not wireless sensing of the target is permitted, if the wireless sensing operation is subject to the authorization condition; and
perform the wireless sensing operation by controlling the transceiver, if the wireless sensing operation is not subject to the authorization condition or the authorization information indicates that the wireless sensing of the target is permitted, wherein the wireless sensing operation comprises:
transmitting a sensing signal;
receiving a response signal resulting from the sensing signal interacting with the target; and
determining a characteristic of the target using the response signal;
**characterized in that**
the circuitry (210) is further configured to
determine whether the wireless sensing operation is subject to a spatial constraint , wherein the spatial constraint is a condition that restricts the wireless sensing operation to a spatial area;
obtain area information indicating the spatial area, if the wireless sensing operation is subject to the spatial constraint, wherein
the wireless sensing operation is performed only within the area indicated by the area information, if the wireless sensing operation is subject to the spatial constraint, by transmitting the sensing signal only within the area indicated by the area information by adjusting transmission parameters.

10. The wireless sensing apparatus according to claim 9, comprising
output means (240) configured to prompt a user to provide the authorization information, if the wireless sensing operation is subject to the authorization condition; and
input means (240) configured to receive the authorization information by a user input.

11. The wireless sensing apparatus according to claim 9 or 10, comprising
memory (230) configured to store category information indicating a first predetermined category of fist sensing operations and a second predetermined category of second sensing operations, wherein
the first sensing operations are subject to a spatial constraint,
the second sensing operations are subject to an authorization condition, and
the circuitry (210) is configured to determine whether the wireless sensing operation is subject to the spatial constraint and/or the authorization request by
determining whether the wireless sensing operation is included in a first predetermined category of first sensing operations and/or in a second predetermined category of second sensing operations.

12. The wireless sensing apparatus according to any one of claims 9 to 11, wherein
the transceiver (220) comprises a directional antenna; and
the circuitry (210) is configured to perform the wireless sensing operation by controlling the transceiver using the directional antenna.
